# EUROPEAN PATENT APPLICATION

(11) **EP 2 239 679 A1**
(43) Date of publication of application: **13.10.2010**
(21) Application number: 09157658.7
(22) Date of filing: 08.04.2009
(51) Int. Cl.: G06F 21/20

(54) **A method and a system for controlling the use of an electronic device**

(71) Applicant: Vázquez del Mercado Habif, David, 52149 Metepec (MX)
(72) Inventor: Vázquez del Mercado Habif, David, 52149 Metepec (MX)
(74) Representative: ZBM Patents

(57) **Abstract**

A system for controlling the use of an electronic device by at least one user, comprising means for verifying if at least one restriction condition related to the use of the electronic device is satisfied; means for applying a restriction action to the electronic device for constraining its use; means for variably determining at least one non-agreed request to the user; means for doing the determined non-agreed request accessible to the user; means for receiving a non-agreed input from the user in response to the request; means for verifying if the received non-agreed input from the user corresponds to the expected input; and means for cancelling the restriction action applied to the electronic device.

## Description

The present invention refers to a method for controlling the use of an electronic device by a user. More specifically, the invention refers to a method for applying the corresponding restrictions of use of the electronic device, when determined conditions are satisfied, and cancelling/preserving said restrictions depending on the expected/unexpected input from user.

The invention also relates to a system and a computer program for controlling the use of an electronic device by a user suitable for carrying out such a method.

### Background of the invention

Nowadays, they are known different methods and systems for controlling the use of electronic devices and/or the access to determined contents which are accessible through said electronic devices, as stated below by means of references to some existing documents.

For example, the Apple web page located in the URL http://docs.info.apple.com/article.html?path=Mac/10.4/en/mh2042.html, which title is *"Mac* OS X *10.4 Help - Turning a screen saver on or off",* and the Microsoft web page located in the URL http://www.microsoft.com/middleeast/atwork/gettingstarted/worksecure.mspx, which title is *"10 Ways to Work More Securely",* refer to operating systems comprising screen savers protected by password.

These password protected screen savers make it possible to protect a computer from unwanted uses when the user leaves his computer unattended. The user can configure the computer for auto locking after a certain inactivity period and being only possible to unlock the computer if the user knows and inputs the predefined password.

Another example is illustrated in the Softonic web page located in the URL http://passman-plus.softonic.com/ and which title is *"PassMan Plus - Descargar",* disclosing a software that also allows to protect a computer from unwanted uses when the user decides to execute said software because, for example, he leaves his computer unattended. Thus, the computer can only be unlocked by correctly answering a question which has been predefined by the user. Said preconfigured question can be changed by the user as many times as the user wants.

There also exist systems and methods which comprises dynamic passwords for protection from unwanted uses. For example, the PCT application W002061640 discloses a safe identification system in banking, financial and electronic information systems, characterized by the use of changing passwords or variables, through the use of name/number of variable access and by the sharing of the necessary data to calculate the name/number of access and passwords. Said access name/number and variable password are defined based on rules pre established by the client. Therefore, the access name/numbers and password are not stored in a database, but calculated by the client, at the moment its use is deemed necessary.

Moreover, the US patent US7106845 discloses several security methods based on changing passwords. One of these methods employs an algorithm that changes values, where the algorithm is known by the user. For example, the algorithm may be a series of digits based on the following: hour of day, day of week, quarter of the year, a.m. or p.m., day of the month, and month of the year. If the user knows the order of such, the user can readily generate the appropriate numeric code corresponding to the current time, and since the time continually changes, the code necessarily changes likewise.

Another method disclosed in said US patent consists of sending a random part to a user, such as over their pager or phone, which they append to some user-defined, fixed portion of their PIN, or used in addition to their PIN.

Another method requires the user to interact with a series of predetermined questions that each requires a numeric response. The order of the questions would be scrambled each day, or periodically, to help change the user's response to improve security and employ questions that typically only the user would know (because the answers were previously provided by the user). Yet another method employs an N by M matrix of random numbers, from which a user selects numbers from predetermined positions to generate a current security code.

All the previously mentioned documents disclose a common feature, which is based on sharing information for identification (or validation) between the user and the system. For instance: secret codes, static passwords, questions-responses which are supposed to be only known by the user, dynamic passwords, etc. Said information for identification (or validation) is shared between the user and the system in the sense that the system administrator (or security administrator, or any other equivalent role) communicates to the user the criteria (data, algorithm, etc.) that the user must apply for identification (or validation) in the system or, alternatively, the user himself configures said identification (or validation) criteria on the system through the corresponding security functionalities.

Hence, these user validation methods do not cover the possibility of the information for validation to be only configured and shared with the system by an exclusive user profile different from the "final user", without any communication to nor intervention of the "final user". Said exclusive user profile could be referred as "controller user". In other words, the user validation methods commented up to this point do not consider the position of "controller user" as the only involved participant that predefines and shares with the system the criteria for determining the validity (or deservingness, or merit, or worthiness, etc.) of the "final user" for using the system.

The US patent application US 2008/0148310 discloses a system for parental control in a media network, said system offering to the parents (or equivalent) the possibility of locking to the children (or equivalent) the access to determined media contents in the network. They are proposed different ways of identifying (or validating) the users (both parents and children) involving, for instance, the user entering a user identification string, a username and password combination, a personal identification number (PIN), a password, etc.

Furthermore, this document discloses means for exchanging instant messages between parents and children, the goal of said messages exchange being the parents to dynamically verify the fulfilment of determined conditions (e.g., "Did you clean your room?"), which depend on the children behaviour and are considered by the parents as requirements for granting to the children access to the media contents.

Taking into account this last feature, it could be considered that parents play a role equivalent to the "controller user", as defined before, but the queries comprised in the messages sent by the parents to the children are dynamically produced by the parents themselves and not previously defined on the system, so in this case there is no validation information shared between the parents and the system either. Therefore, the same drawback previously commented remains in this case.

Moreover, taking into consideration that the exchange of messages, containing queries and responses, between parents and children is carried out at the moment the children request access to the media contents, said method also presents the disadvantage that the parents (at least one of them) must be available at said precise moment to finally grant or deny access.

On the other hand, the proposed questions seem to be oriented to confirm the conclusion of determined tasks by the children, for example: "Did you clean your room?", or "Have you done your homework?", in which cases the children can give false responses to fraudulently gain permission for accessing the media contents.

### Summary of the invention

It is an object of the present invention to provide a system for controlling the use of an electronic device by a user, which allows improving the security related to the use of electronic devices.

This is achieved by providing, according to a first aspect of the invention, a system for controlling the use of an electronic device by at least one user, comprising means for verifying if at least one restriction condition related to the use of the electronic device is satisfied; means for applying a restriction action to the electronic device for constraining its use; means for variably determining at least one non-agreed request to the user; means for doing the determined non-agreed request accessible to the user; means for receiving a non-agreed input from the user in response to the request; means for verifying if the received non-agreed input from the user corresponds to the expected input; and means for cancelling the restriction action applied to the electronic device.

This system allows improving the security related to the use of the electronic device, by defining an additional security level based on variably obtained non-agreed requests and non-agreed inputs, that is to say, the user is validated on the system for using the device by means of variable validation criteria (data, algorithms, etc.) without previously agreeing (or sharing) with the system said variable validation criteria.

The provision of means for verifying if at least one restriction condition related to the use of the electronic device is satisfied allows detecting any kind of incident in the use of the electronic device requiring some restriction action, according to the security policy defined on the system of the invention. The restriction condition can be, for example: the maximum time of use has been reached, or a specific security step has been executed (e.g. a username has been introduced), or it has been selected to execute a determined application, or it has been selected to access to certain contents, or the administrator of the system has generated a determined signal, or an alarm indication has been received, or any other similar situation.

Furthermore, the provision of means for applying a restriction action to the electronic device for constraining its use allows to partially or totally restricting the use of the electronic device in case of some restriction condition is satisfied. The restriction action can be, for example: to lock the electronic device, or to lock another device connected to the electronic device, or to deny the access to determined functionalities, or to deny the access to determined contents, or to switch off the electronic device, or any other similar action.

The supply of means for variably determining at least one non-agreed request to the user allows to finally requesting some kind of predefined validating action from the user in order to cancel/preserve the previously executed restriction action, depending on the validity/invalidity of said validating action. A non-agreed request to the user refers to the generation of some kind of communication for the user indicating that must do something on the system (validating action), which has not been previously agreed between the user and the system administrator (or equivalent), that is to say, there is no previously shared information between the user and the system regarding to said validating action.

The goal of determining the request in a variable way (variably) is not to repeat the content of the requested validating action in different occurrences of said request for the same user. For example, in a same session of use of the electronic device by a determined user, the maximum time of use can be reached (restriction condition) in two different moments, requiring in both cases some validating action from the user. Then, the objective is to assign different content to each of said requests of validating action. Of course, the commented variability has a general scope, not limited to the same session of use.

The provision of means for doing the request accessible to the user allows ensuring that the user finally knows what to do on the system as validating action, for example, it could be displayed on the screen of the electronic device the message "please, answer the following questions: 'Q1?'; 'Q2?'; 'Q3?'; 'Q4?'...".

Moreover, the provision of means for receiving a non-agreed input from the user in response to the request allows obtaining the content of the validating action from the user, for example, the responses to the corresponding questions. The concept of non-agreed input from the user refers to the user does not shares with the system the content of the input, that is to say, the expected input has been predefined by an special user role, that could be referred as "controller user", different from the ("normal" or "final") user, without any agreement between the system and the user on this matter.

The supply of means for verifying if the input from the user corresponds to the expected input allows checking the validity of the user input according to the input rules predefined by the "controller user".

Furthermore, the provision of means for cancelling the restriction action applied to the electronic device allows reverting the electronic device to its original state just before the application of said restriction action. For example, considering the restriction action is the lock of the device, the mentioned means allow unlocking the electronic device.

According to an embodiment of the invention, the system comprises means for establishing at least one connection to a communication network (e.g. a global communication network, such as Internet). These means allow, for example, obtaining data to be stored in the system from remote sites, or configuring the system from remote sites, or, in general, operating the system from remote sites, or any other similar facility. Said connection can be very useful for parental control applications, in which case the school (or institute, or academy, or any other kind of educational organization), where, for example, the children are studying, can be a good remote provider of predetermined validations questions and predetermined expected validation responses.

According to another embodiment of the invention, the system comprises means for connecting at least one electronic device, allowing the system to control the use of said electronic devices (one or several). Thus, the system acts as a central controller of the use of all the electronic devices which are connected to the system. Consequently, the system could be referred as multi-device controller.

Preferably, the system comprises a users repository for storing data related to at least one user of the electronic device. Examples of said data are about: restriction conditions, restriction actions, non-agreed requests, non-agreed inputs, tracking of the user activity, etc.

The invention also relates to an electronic device comprising means for connecting the system for controlling the use of the electronic device by at least one user, as described above. Alternatively, the invention provides an electronic device comprising the system for controlling the use of the electronic device by at least one user.

This electronic device can be, for example, a computer, a mobile phone, a video game console, a cable TV decoder, or a GPS, etc.

According to a second aspect of the invention, it is provided a method for controlling the use of an electronic device by at least one user, the method comprising the steps of:
(a) Verifying if at least one restriction condition related to the use of the electronic device is satisfied;
   In case of positive result:
(b) Applying a restriction action to the electronic device for constraining its use;
(c) Variably determining at least one non-agreed request to the user;
(d) Doing the determined non-agreed request accessible to the user;
(e) Receiving a non-agreed input from the user in response to the request;
(f) Verifying if the received non-agreed input from the user corresponds to the expected input;
   In case of positive result:
(g) Cancelling the restriction action applied to the electronic device.

Preferably, the restriction condition comprises a time of use threshold and said restriction condition is satisfied when the user's time of use exceeds said time of use threshold.

In an embodiment of the invention, the method further comprises a step (h) of calculating the user's time of use, for evaluating the restriction condition based on a time of use threshold, which can be exceeded or not depending on said user's time of use.

In a preferred embodiment of the invention, the non-agreed request comprises a predetermined number of validation questions and the non-agreed input from the user comprises at least one validation response for each of said validation questions.

These validation questions-responses can be defined depending on the environment wherein it is pretended to improve the security related to the use of electronic devices. For example, in a research environment, wherein there exists a lot of confidential data shared between the components of the research team, the questions can be about said confidential data for ensuring the electronic devices are only used by the research team members. In this case, the questions-responses and, in general, all the related parameters can be configured by the project leader ("controller user").

Another example could be a department or division environment in a company or any other kind of organization, in which case, the questions-responses can be defined in terms of know-how (secret knowledge), or about internal organization, or any other confidential matter.

Parental control is another very important application of the invention, in which case the questions-responses and other parameters can be defined according to the educational level of the children, more precisely they can be considered the contents that the children are studying at each moment. Thus, said education based questions-responses approach can give to the parents ("controller users") a good and constantly updated indicator of the educational evolution of the children, much more reliable than, for example, any response from children to a dynamically produced question like "Have you done your homework?".

According to an embodiment of the invention, the method further comprises a step (i) of providing a questions-responses repository for storing at least one predetermined validation question and at least one predetermined expected validation response related to the predetermined validation question.

In another embodiment of the invention, the questions-responses repository comprises an educational level indicator for each predetermined validation question stored in said questions-responses repository.

In a preferred embodiment, the validation questions are predetermined validation questions variably obtained from the questions-responses repository.

Preferably, the method further comprises a step (j) of obtaining input from an administrator user (or "controller user") for configuring the parameters comprised in the questions-responses repository.

In another embodiment, the method further comprises a step (k) of obtaining input from an administrator user (or "controller user") for configuring the parameters comprised in the users repository, for example:
- The time of use threshold;
- The restriction action;
- he educational level indicator;
- The number of validation questions comprised in the non-agreed request to the user;
- The minimum number of validation responses, comprised in the non-agreed input from the user, matching up with the predetermined expected validation responses related to the validation questions comprised in the non-agreed request, for determining the validity of the non-agreed input from the user.

In another embodiment of the invention, the method further comprises a step (I) of keeping track of users activity.

Preferably, in the step (I) of keeping track of users activity, the results are stored in the corresponding log (unstructured data). This tracking data can also be stored in a structured manner, for example in the users repository considering at least one of the following data:
- Number of user access;
- Duration of each user access;
- Number of non-agreed input from the user for each user access;
- Number of responded validation questions for each non-agreed input from the user;
- Number of well responded validation questions for each non-agreed input from the user.

Further, the method may comprise a step (m) of initially obtaining the user related parameters comprised in the user repository for controlling the use of the electronic device by said user.

According to an embodiment, the validation questions are predetermined validation questions which educational level indicator ranks with the user's educational level.

In another embodiment, the method further comprises a step (n) of obtaining questions-responses related data from a remote site through a connection to a communication network and storing said questions-responses related data into the questions-responses repository.

According to another embodiment of the invention, the method further comprises a step (o) of obtaining input from an administrator (or "controller user") from a remote site through a connection to a communication network, for configuring the parameters comprised in the questions-responses repository and the users repository.

In a preferred embodiment of the invention, the step (f) of verifying the received non-agreed input produces one of the two following possible results:
Positive: if a predetermined minimum number of validation responses match up with the predetermined expected validation responses related to the predetermined validation questions comprised in the non-agreed input;
Negative: otherwise.

In another embodiment of the invention, the restriction action is the lock of the electronic device. Alternatively, the restriction action is the lock of an input/output device connected to the electronic device. For example, in case of the electronic device being a computer, the input/output device is a keyboard.

In a preferred embodiment of the invention, the validation questions are test based. Furthermore, in another embodiment, the validation questions comprise multimedia contents.

According to another aspect, the invention provides a computer program product comprising program instructions for causing a computer to perform the method for controlling the access to an electronic device by at least one user.

Said computer program product can be embodied on storing means, such as recording means, computer memory, read only memory, or can be carried on a carrier signal, such as electronic or optical signal.

### Brief description of the drawings

An embodiment of the present invention will be described in the following, only by way of non-limiting example, with reference to the appended drawings, wherein:
Figure 1 is a representation of the dialogue window requesting input of a password to login the system of the invention;
Figure 2 is a representation of the dialogue window for changing the password to login the system of the invention;
Figure 3 is a representation of the screen related to the functionality for configuring the restriction condition (lock of the electronic device) and the non-agreed request (validation questions) for a determined user, according to the invention;
Figure 4 is a representation of one of the screens related to the tracking functionality, giving an overview about the activity of a determined user, according to the invention;
Figure 5 is a representation of one of the screens related to the non-agreed request functionality, in particular showing a validation question comprised in said non-agreed request;
Figure 6 is a schematic representation of the interaction between the main modules comprised in the system of the invention.

### Detailed description of the invention

In the following, a preferred embodiment of the present invention will be described, wherein the system for controlling the use of an electronic device by at least one user is a parental control system and the electronic device is a computer.

In this embodiment, said parental control system is comprised in the computer which comprises an operating system, which can be Windows, or Apple, or Unix, or Linux, or any other operating system.

The parental control system comprises a database for storing data related to the users of the computer and data related to the validation questions-responses, that is to say, the predetermined validation questions and related predetermined expected validation responses.

This database comprises the following data related to each user of the computer:
- Username or user identifier (unique key);
- Status: "active" or "inactive";
- Password;
- Role of the user: "controller user" or "final user";

The data described below is only necessary for the role "final user":
- Time of use threshold (maximum time of use);
- Number of validation questions comprised in the non-agreed request to the user;
- Minimum number of validation responses, comprised in the non-agreed input from the user, matching up with the predetermined expected validation responses related to the validation questions comprised in the non-agreed request, for determining the validity of the non-agreed input from the user;
- Reference to the educational modules which are assigned to the user (educational level indicator);
- Tracking of user activity related data:
   ○ Number of user access (or sessions of use), that is to say, number of authentications carried out by the user;
   ○ Duration of each user access (time comprised between login and logoff in the same session of use);
   ○ Number of non-agreed inputs from the user in each session of use;
   ○ Number of responded validation questions for each non-agreed input from the user:
      ■ Aggregated by session of use;
      ■ Aggregated by educational module;
      ■ Aggregated by educational topic;
   ○ Number of well responded validation questions for each non-agreed input from the user:
      ■ Aggregated by session of use;
      ■ Aggregated by educational module;
      ■ Aggregated by educational topic.
   ○ Set of question-response identifiers corresponding to the validation questions comprised in the different non-agreed requests applied to the user in a determined period of time (last week, last month, etc.).

The database also comprises three levels of data related to the predetermined validation questions and predetermined expected validation responses:
- Educational modules:
   ○ Module identifier (unique key);
   ○ Module description (e.g. first course of primary school);
- Educational topics:
   ○ Topic identifier (unique key);
   ○ Topic description (e.g. Mathematics);
   ○ Reference to the related educational module;
- Predetermined validation questions and related predetermined expected validation responses:
   ○ Question-response identifier (unique key);
   ○ Educational level indicator of the question-response;
   ○ Question contents:
      ■ Text contents;
      ■ Multimedia contents;
   ○ Proposed possible responses contents:
      ■ Text contents;
      ■ Multimedia contents;
      ■ Correctness indicator, which possible values are:
         - "Correct", in case of the proposed response is a correct response to the related question;
         - "Incorrect", in case of the proposed response is a not correct response to the related question (of course, in test based questions it is necessary to propose incorrect responses);
   ○ Reference to the related educational topic.

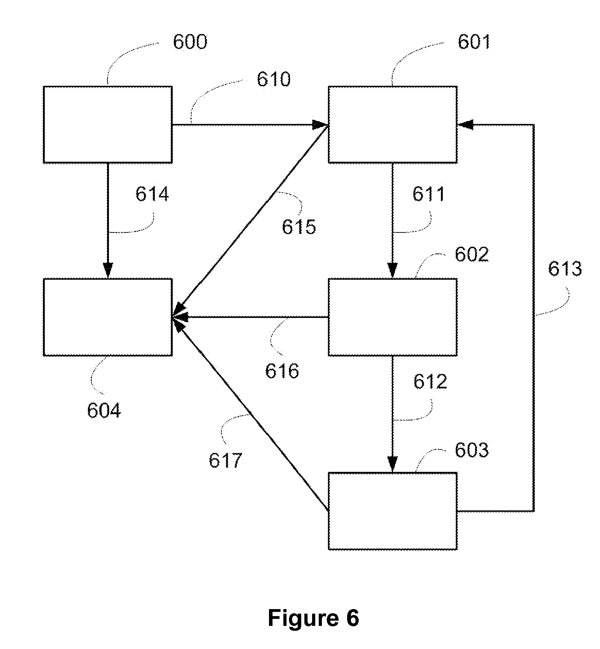

Moreover, the parental control system of the present preferred embodiment also comprises several modules. The figure 6 is a schematic representation of the interaction between the main modules, according to the present embodiment of the invention. Each one of said modules relates to a module of a computer program or to a computer program. The users authentication module allows the authentication of the users (of any role, "controller" or "final" users), receiving the username and password entered by the user, validating them according to the corresponding data stored in the database and obtaining the rest of data related to the user from which the system is initially configured.

The configuration module allows the "controller user" to predefine the initial conditions of the system and comprises functionalities for configuring the parameters related to the "final users": time of use threshold (or maximum time of use), number of validation questions comprised in the non-agreed request to the user, minimum number of "correct" validation responses for determining the validity of the non-agreed input from the user, educational modules which are applicable to the user (educational level indicator), etc.

On the other hand, the time calculation module 600 determines when the user exceeds the predefined time of use threshold in order to lock the computer.

The lock/unlock module 601 locks the computer when the time calculation module 600 determines that the user has exceeded the time of use threshold and unlocks the computer when responses verification module 603 determines the correctness of the validation responses entered by the user.

The questions manager module 602 variably selects the predetermined validation questions to produce the non-agreed request to the user and making them accessible to the user for obtaining the corresponding validation responses. This variably selection of validation questions takes into account the set of question-responses identifiers which have already been applied to the user in the last predetermined period (last week, last month, etc), for avoiding the repetition of validation questions in different occurrences of non-agreed requests to the user. The responses verification module 603 determines the correctness of the validation responses entered by the user, by comparing said responses with the predetermined expected validation responses according to the predetermined validation questions stored in the database.

The tracking module 604 keeps track of the user activity and updates the corresponding data in the database, more specifically the tracking of user activity related data, for example: number of user access, duration of each user access, number of non-agreed inputs from the user in each session of use, etc.

The connection to internet module allows the connection of the system to internet for obtaining predetermined validation questions and predetermined expected validation responses from remote sites, for obtaining data related to the users from remote sites, and for, in general, operating the system from remote sites.

Basically, the parental control method according to the present preferred embodiment comprises the steps of:
Verifying time of use;
   In case of positive result:
   Locking the computer;
   Determining validation questions;
   Displaying validation questions;
   Obtaining validation responses;
   Verifying validation responses;
      In case of positive result:
      Unlocking the computer.

The execution of step "Verifying time of use" starts from an initial state wherein the user has been previously authenticated in the computer according to the users policy defined in the computer, so in this initial state, the user is already using the computer.

In said step "Verifying time of use" the time calculation module 600 detects when the user exceeds the time of use threshold, according to the corresponding parameter time of use threshold assigned to the user and stored in the database. In case of the time of use threshold is exceeded, the time calculation module 600 produces a signal 610 for the lock/unlock module 601 requesting to lock the computer. The time calculation module 600 also generates the related tracking data through the data flow 614 for the tracking module 604.

In another preferred embodiment of the invention, the parental control method comprises a step of authenticating the user in the parental control system that is executed before the step of "Verifying time of use".

In the step of "Locking the computer", the lock/unlock module 601 locks the computer when receives the signal 610 from the time calculation module 600 requesting to lock the computer, generates the related tracking data through the data flow 615 for the tracking module 604 and produces a signal 611 for the question manager module 602 to execute the next step.

In the step of "Determining validation questions", the questions manager module 602 variably obtains a number of predetermined validation questions, according to the predetermined number of validation questions comprised in the non-agreed request. The questions manager module 602 identifies the predetermined validation questions related to the user, firstly obtaining the reference to the educational modules related to the user, secondly obtaining the educational topics related to said educational modules, and thirdly randomly obtaining the predetermined validation questions related to said educational topics. Moreover, as commented before, the questions manager module 602 avoids selecting validation questions which have already been selected in previous occurrences of non-agreed requests, considering a predetermined period of time (last week, last month, etc.) for the same user.

In the step of "Displaying validation questions", the questions manager module 602 displays the validation questions determined in the previous step through a screen, in order to obtain the corresponding validation responses from the user. Finally, the questions manager module 602 generates the related tracking data through the data flow 616 for the tracking module 604 and produces a signal 612 for the responses verification module 603 for executing the next step.

In the step of "Obtaining validation responses", the responses verification module 603 obtains the validation responses comprised in the non-agreed input from the user in response to the non-agreed request.

In the step of "Verifying validation responses", the responses verification module 603 compares the validation responses from the user with the corresponding "correct" predetermined validation responses stored in the database. Then, if the number of matching up validation responses is greater or equal than the predetermined minimum number of validation responses, the responses verification module 603 produces a signal 613 for the lock/unlock module 601 requesting to unlock the computer. The responses verification module 603 also generates the related tracking data through the data flow 617 for the tracking module 604.

In all these steps comprised in the parental control method, according to the present preferred embodiment, the tracking module 604 updates the tracking of user activity related data with the corresponding values received through the data flows 614, 615, 616 and 617 from the time calculation module 600, lock/unlock module 601, question manager module 602 and responses verification module 603 respectively.

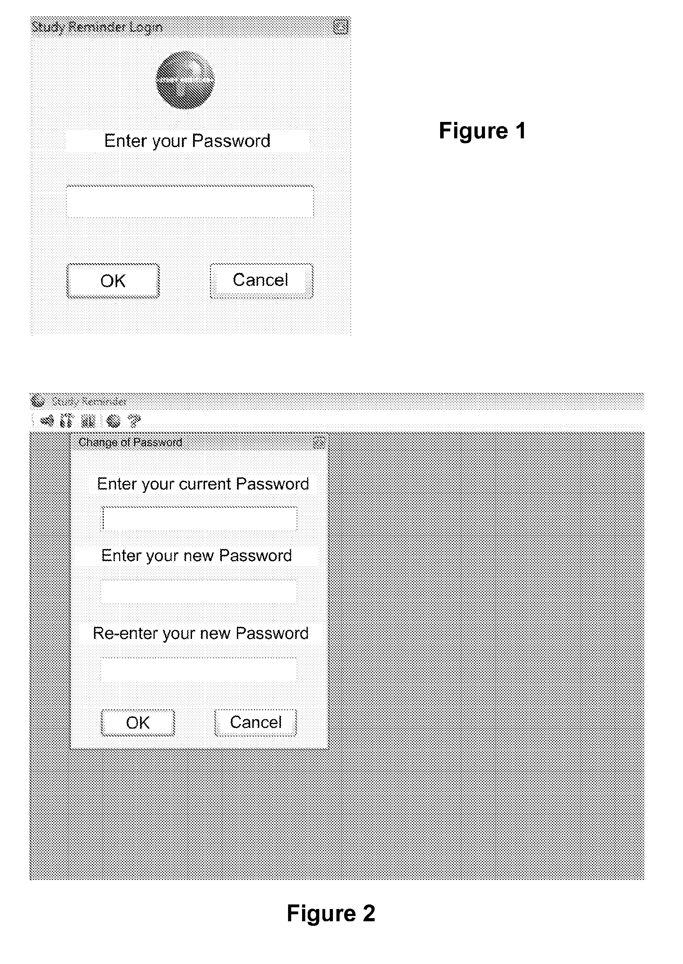

The figure 1 is a representation of a dialogue window requesting input of a password to login the system of the invention. This dialogue window comprises the following main elements:
- The label "Escriba su contraseña" and the text box related to said label that allows to the user to input the assigned password;
- The button "Aceptar" for confirming, when clicked, that the password has been entered; and
- The button "Cancelar" for cancelling, when clicked, the authentication of the user.

In another preferred embodiments of the invention, said dialogue window can also comprise the username of the user.

The figure 2 is a representation of the dialogue window for changing the user's password to login the system of the invention. Said dialogue window comprises the following main elements:
- The label "Escriba su contraseña actual" and the text box related to said label that allows to the user to input the currently assigned password;
- The label "Escriba su contraseña nueva" and the text box related to said label that allows to the user to input the new password to be assigned to the user;
- The label "Confirme su contraseña nueva" and the text box related to said label that allows to the user to reinput the new password to be assigned to the user;
- The button "Aceptar" for confirming, when clicked, that the three previous passwords have been entered by the user; and
- A button "Cancelar" for cancelling, when clicked, the operation of changing the password.

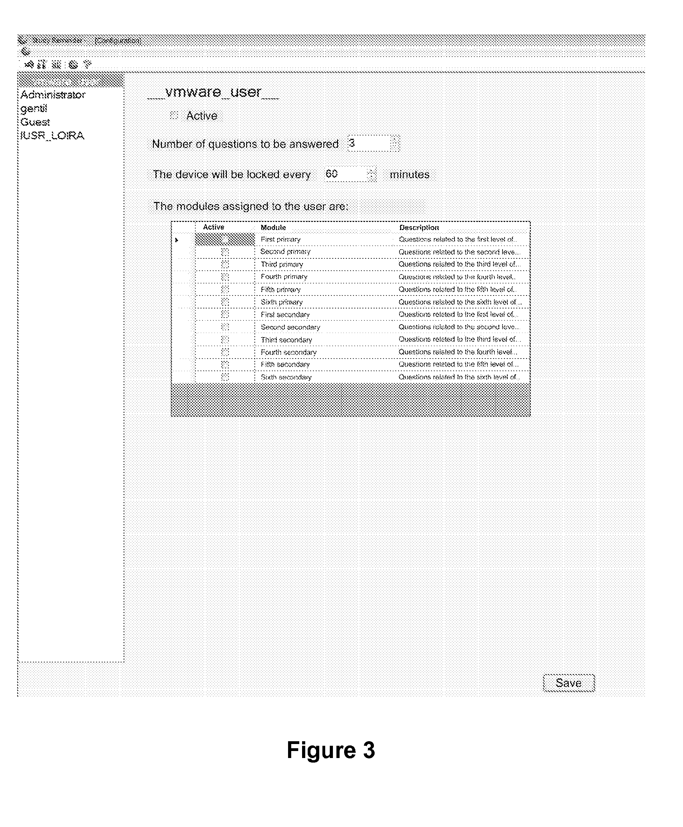

The figure 3 is a representation of the screen related to the functionality for configuring the restriction condition (lock of the electronic device) and the non-agreed request (validation questions) for a determined user, according to the invention. Said screen comprises the main following elements:
- On the left margin, the list of existing users ("_vmware_user_", "Administrator", "gentil", "Guest" and "IUSR_LOIRA") in the parental control system that allows to the "controller user" to select the user to be configured;
- The username "_vmware_user_" of the user that the "controller user" has selected for configuration;
- The label "Activo" indicating whether the selected user is active or inactive (in this case, the user "_vmware_user_" is active);
- The label "Número de preguntas a contestar" and the combo box related to said label that allows to the "controller user" to configure the number of validation questions comprised in the non-agreed request to the user (in this case, the number of validation questions is "3");
- The label "EI equipo se bloqueará cada" and the combo box related to said label that allows to configure the time of use threshold in minutes (in this case, the time of use threshold is "60" minutes);
- A modifiable list that allows to the "controller user" to assign educational modules to the user, said list comprising the following three columns:
   ○ "Activo", for activating or deactivating the corresponding educational module assigned to the user;
   ○ "Módulo", which allows to the "controller user" to select the educational module to be assigned to the user;
   ○ "Descripción", displaying the description of the selected educational module.

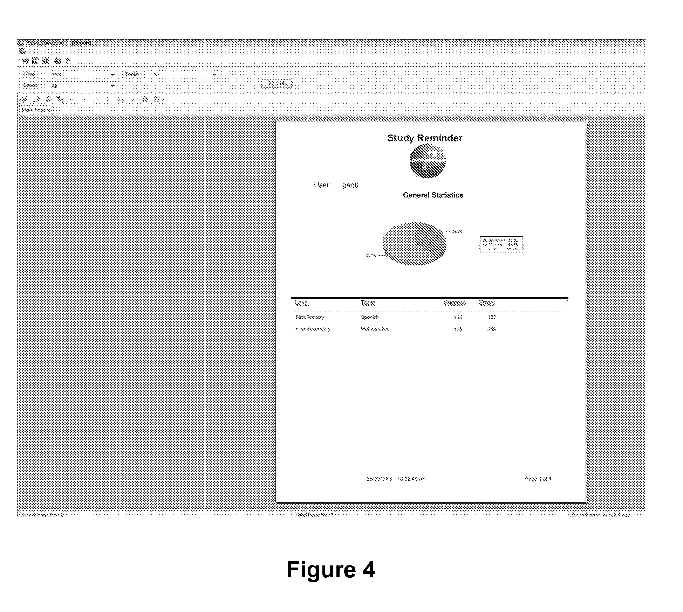

The figure 4 is a representation of one of the screens related to the tracking functionality, said screen giving a specific overview about the activity of a determined user. Said screen comprises the following main elements:
- The first label "Usuario" and the second label "gentil" related to said first label, displaying the username of the selected user;
- The label "Estadística General", which indicates the type of content displayed on the screen: General Statistics;
- The cake chart, which gives a graphical representation of the percentages of correct validation responses ("Aciertos" - "38,3%") and incorrect validation responses ("Errores" - "61,7%");
- The list giving the number of well responded validation questions (or correct validation responses) and the number of wrong responded validation questions (or incorrect validation responses), both numbers grouped (or aggregated) by educational module and educational topic.

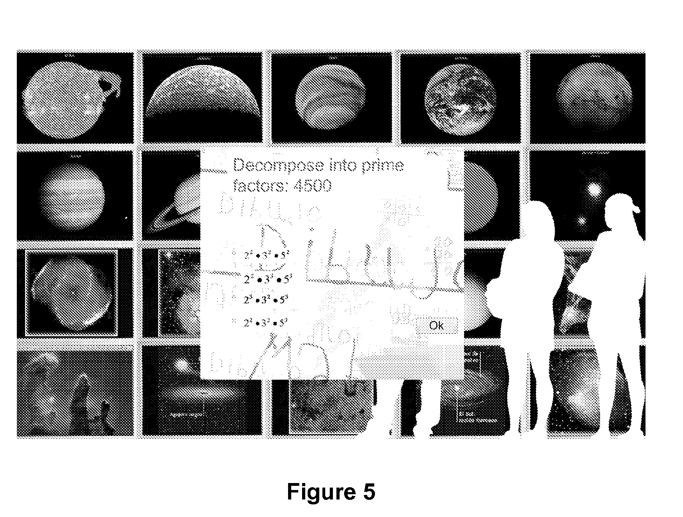

The figure 5 is a representation of one of the screens related to the non-agreed request functionality, in particular showing a validation question comprised in the non-agreed request, according to the invention. Said screen comprises the following main elements:
- The label "Descomponer en término de sus factores primos: 4500", which represents the validation question;
- The list "2²·3²·5², 2²·3³·5³, 2³·3²·5³, 2²·3²·5³", which allows to the user to select at least one of the proposed options as the validation response; and
- The button "Aceptar" for confirming, when clicked, that the validation response has been inputted.

Thus, while the preferred embodiments of the methods and of the systems have been described in reference to the environment in which they were developed, they are merely illustrative of the principles of the invention. Other embodiments and configurations may be devised without departing from the scope of the appended claims.

Further, although the embodiments of the invention described with reference to the drawings comprise computer apparatus and processes performed in computer apparatus, the invention also extends to computer programs, particularly computer programs on or in a carrier, adapted for putting the invention into practice. The program may be in the form of source code, object code, a code intermediate source and object code such as in partially compiled form, or in any other form suitable for use in the implementation of the processes according to the invention. The carrier may be any entity or device capable of carrying the program.

For example, the carrier may comprise a storage medium, such as a ROM, for example a CD ROM or a semiconductor ROM, or a magnetic recording medium, for example a floppy disc or hard disk. Further, the carrier may be a transmissible carrier such as an electrical or optical signal, which may be conveyed via electrical or optical cable or by radio or other means.

When the program is embodied in a signal that may be conveyed directly by a cable or other device or means, the carrier may be constituted by such cable or other device or means.

Alternatively, the carrier may be an integrated circuit in which the program is embedded, the integrated circuit being adapted for performing, or for use in the performance of, the relevant processes.

## Claims

1. A method for controlling the use of an electronic device by at least one user, the method comprising the steps of:
(a) Verifying if at least one restriction condition related to the use of the electronic device is satisfied;
In case of positive result:
(b) Applying a restriction action to the electronic device for constraining its use;
(c) Variably determining at least one non-agreed request to the user;
(d) Doing the determined non-agreed request accessible to the user;
(e) Receiving a non-agreed input from the user in response to the request;
(f) Verifying if the received non-agreed input from the user corresponds to the expected input;
In case of positive result:
(g) Cancelling the restriction action applied to the electronic device.

2. A method according to claim 1, wherein the restriction condition comprises a time of use threshold and said restriction condition is satisfied when the user's time of use exceeds said time of use threshold.

3. A method according to any of claims 1 or 2, further comprising a step (h) of calculating the user's time of use.

4. A method according to any of claims 1 to 3, wherein the non-agreed request comprises a predetermined number of validation questions and the non-agreed input from the user comprises at least one validation response for each of said validation questions.

5. A method according to any of claims 1 to 4, further comprising a step (i) of providing a questions-responses repository for storing at least one predetermined validation question and at least one predetermined expected validation response related to the predetermined validation question.

6. A method according to claim 5, wherein the questions-responses repository comprises an educational level indicator for each predetermined validation question stored in said questions-responses repository.

7. A method according to claim 5 or 6, wherein the validation questions are predetermined validation questions variably obtained from the questions-responses repository.

8. A method according to claim 6 or 7, wherein the validation questions are predetermined validation questions, which educational level indicator ranks with the user's educational level.

9. A method according to claim 7 or 8, wherein step (f) of verifying the received non-agreed input produces one of the two following possible results:
Positive: if a predetermined minimum number of validation responses match up with the predetermined expected validation responses related to the predetermined validation questions comprised in the non-agreed input;
Negative: otherwise.

10. A method according to any of claims 1 to 9, wherein the restriction action is the lock of the electronic device.

11. A system for controlling the use of an electronic device by at least one user, comprising means for verifying if at least one restriction condition related to the use of the electronic device is satisfied; means for applying a restriction action to the electronic device for constraining its use; means for variably determining at least one non-agreed request to the user; means for doing the determined non-agreed request accessible to the user; means for receiving a non-agreed input from the user in response to the request; means for verifying if the received non-agreed input from the user corresponds to the expected input; and means for cancelling the restriction action applied to the electronic device.

12. A system according to claim 11, further comprising means for establishing at least one connection to a communication network.

13. A system according to claim 11 or 12, further comprising means for connecting at least one electronic device.

14. An electronic device comprising means for connecting a system for controlling the use of the electronic device by at least one user according to any of claims 11 to 13.

15. An electronic device comprising a system for controlling the use of the electronic device by at least one user according to any of claims 11 to 13.

16. A computer program product comprising program instructions for causing a computer to perform the method for controlling the access to an electronic device by at least one user according to any of claims 1 to 10.

17. A computer program product according to claim 16, embodied on storing means.

18. A computer program product according to claim 16, carried on a carrier signal.
